# EUROPÄISCHE PATENTSCHRIFT

(11) **EP 0 692 511 B1**
(45) Veröffentlichungstag und Bekanntmachung des Hinweises auf die Patenterteilung: **10.05.2000**
(21) Anmeldenummer: 95810439.0
(22) Anmeldetag: 04.07.1995
(51) Int. Cl.: C08G 73/00, C08G 73/06, D06P 1/52

(54) **Verfahren zur Herstellung eines Färbereihilfsmittels**
Method of fabrication of a dyeing aid
Procédé de fabrication d'adjuvant de teinture

(30) Priorität: 12.07.1994 CH 222294
(43) Veröffentlichungstag der Anmeldung: 17.01.1996
(73) Patentinhaber: Ciba Specialty Chemicals Holding Inc., 4057 Basel (CH)
(72) Erfinder: Tittmann, Rolf, Dr., D-79540 Lörrach (DE); Roth, Ruth, CH-4057 Basel (CH)

(56) Entgegenhaltungen:
- EP-A- 0 102 052
- EP-A- 0 431 423
- FR-A- 2 567 897
- GB-A- 1 164 523
- PATENT ABSTRACTS OF JAPAN vol. 6 no. 208 (C-130) [1086] ,20.Oktober 1982 & JP-A-57 115421 (NIPPON CARBIDE KOGYO K.K.)

## Beschreibung

Die vorliegende Erfindung betrifft ein Verfahren zur Herstellung von wasserlöslichen Polykondensationsprodukten durch Umsetzung von mehrfunktionellen Aminen und Cyanamid bzw. dessen Derivaten unter Abspaltung von Ammoniak.

Derartige Polykondensationsprodukte, Verfahren zu ihrer Herstellung sowie deren Verwendung zur Verbesserung der Echtheitseigenschaften von Färbungen mit substantiven Farbstoffen sind in grosser Zahl bekannt. Die vorbekannten Herstellungsverfahren weisen jedoch Nachteile z.B. bezüglich der Handhabbarkeit, Verfahrenskontrolle und Ökologie auf. So wird die Umsetzung oftmals in Gegenwart eines Metallsalzkatalysators ausgeführt, der auch im Endprodukt noch in Spuren vorhanden ist bzw. mittels aufwendiger Reinigungsverfahren entfernt werden muss. Ein anderes bekanntes Verfahren wird batchweise unter Zusammengeben aller Reaktanden ausgeführt und ist dementsprechend bezüglich der Kontrolle der sehr stürmisch unter Ammoniakabspaltung verlaufenden Reaktion problematisch siche EP-A-0 431 423. Es wurde weiterhin ein ohne jeglichen Lösungsmittelzusatz ablaufendes Verfahren vorgeschlagen, welches aufgrund der hochviskosen Beschaffenheit des Reaktionsgemisches nur wenig praktikabel ist.

Es wurde nun überraschend gefunden, dass man entsprechende Polykondensationsprodukte einfach und mit stark verbesserter Verfahrenssicherheit herstellen kann, wenn man das polyfunktionelle Amin zunächst mit einer Ammoniumverbindung in eine protonierte Form überführt und die protonierte Verbindung anschliessend in einem zweiten Schritt mit dem Cyanamid umsetzt.

Gegenstand der vorliegenden Erfindung ist somit ein Verfahren zur Herstellung von basischen Polykondensaten, dadurch gekennzeichnet, dass man
(a) ein Amin der Formel 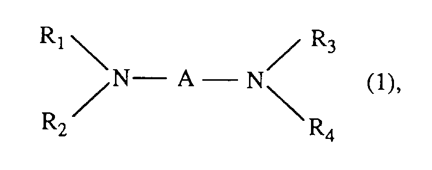 worin R₁, R₂, R₃ und R₄ unabhängig voneinander je Wasserstoff oder gegebenenfalls durch Amino, Hydroxy, Cyano oder C₁-C₄-Alkoxy substituiertes Alkyl bedeuten und A gegebenenfalls substituiertes oder durch ein oder mehrere Heteroatome unterbrochenes Alkylen ist, mit einem Ammoniumsalz in Gegenwart eines nichtwässrigen Lösungsmittels reagieren lässt und
(b) das gemäss (a) erhaltene protonierte Produkt mit einem Cyanamid bei erhöhter Temperatur umsetzt.

A in Formel (1) bedeutet bevorzugt gegebenenfalls durch -O-, -S-, -NH- oder -N(C₁-C₄-Alkyl)- unterbrochenes und/oder durch OH substituiertes C₂-C₂₀-Alkylen. Bevorzugt steht A für einfach oder mehrfach durch -NH- unterbrochenes C₂-C₂₀-Alkylen.

R₁, R₂, R₃ und R₄ bedeuten unabhängig voneinander bevorzugt je Wasserstoff oder C₁-C₄-Alkyl.

Beispiele für geeignete Verbindungen der Formel (1), die im Reaktionsschritt (a) eingesetzt werden können, sind z.B. 1,4-Butandiamin, 1,6-Hexandiamin, Dipropylentriamin, N-(2-Aminoethyl)-1,3-propandiamin, N,N-Bis-(2-aminopropyl)-methylamin, Polyethylenimine oder Polyethylenpolyamine wie Diethylentriamin, Triethylentetramin, Tetraethylenpentamin oder Pentamethylenhexamin. Bevorzugt als Verbindungen der Formel (1) im Schritt (a) sind Polyethylenpolyamine und hierbei insbesondere Diethylentriamin.

Geeignete Ammoniumsalze für das erfindungsgemässe Verfahren sind z.B. Ammoniumsalze organischer oder anorganischer Säuren, z.B. Ammoniumchlorid, Ammoniumsulfat, Ammoniumcarbonat, Ammoniumformiat oder Ammoniumacetat; bevorzugt ist die Verwendung von Ammoniumchlorid.

Bei dem nichtwässrigen Lösungsmittel handelt es sich z.B. um ein hydroxylgruppenhaltiges Lösungsmittel, vorzugsweise um eines mit einem Siedepunkt oberhalb von 150°C und insbesondere oberhalb von 180°C, oder um ein Gemisch verschiedener solcher Lösungsmittel. Beispiele sind Ethylenglykol, 1,2- oder 1,3-Propylenglykol, Butylenglykol, Di-, Tri- oder Tetraethylenglykol und deren Ether sowie Polyethylenglykole mit einem Molgewicht von z.B. 600 bis 5000 und Gemische davon.

Geeignete Cyanamide im Schritt (b) sind z.B. Cyanamid, Dicyandiamid, Guanidin und Biguanidin. Bevorzugt ist die Verwendung von Dicyandiamid im Schritt (b).

Die Verbindung der Formel (1) und das Ammoniumsalz werden im Schritt (a) in einem Molverhältnis von 1:0,7 bis 1:2 und besonders bevorzugt 1:1 bis 1:1,5 eingesetzt. Die Menge an hydroxylgruppenhaltigem Lösungsmittel kann innerhalb weiter Grenzen schwanken und beträgt z.B. 0,2 bis 20 Mol und vorzugsweise 0,4 bis 5 Mol pro Mol Verbindung der Formel (1).

Die Umsetzung gemäss Schritt (a) findet vorzugsweise bei erhöhter Temperatur, z.B. bei 80 bis 200 °C, vorzugsweise bei 100 bis 160°C und besonders bevorzugt bei 110 bis 140°C statt. Man legt vorzugsweise die Verbindung der Formel (1) in dem hydroxylgruppenhaltigen Lösungsmittel oder Lösungsmittelgemisch vor und dosiert die Ammoniumverbindung hinzu; es ist hierbei vorteilhaft, den Reaktionsschritt unter Inertbedingungen, z.B. unter Stickstoffatmosphäre, durchzuführen.

Die gemäss (a) erhaltene protonierte Verbindung der Formel (1) wird anschliessend mit z.B. 0,5 bis 2 Mol und vorzugsweise 0,8 bis 1,5 Mol Cyanamid pro Mol Ausgangsverbindung der Formel (1) zur Reaktion gebracht. Die Umsetzung gemäss (b) findet vorteilhaft in Gegenwart eines oder mehrerer der vorgenannten hydroxylgruppenhaltigen Lösungsmittel bei erhöhter Temperatur, die z.B. 80 bis 250°C und vorzugsweise 140 bis 220°C betragen kann, statt.

Bevorzugt geht man so vor, dass man das Cyanamid zum gemäss (a) erhaltenen Reaktionsgemisch bei einer Temperatur von z.B. 80 bis 200°C und vorzugsweise 140 bis 180°C zudosiert bzw. portionsweise zugibt und nach beendeter Zugabe bei erhöhter Temperatur, z.B. bei 160 bis 250°C und vorzugsweise 180°C bis 220°C, ausreagieren lässt. Dabei wird die Reaktionsmasse viskos und spaltet langsam Ammoniak ab. Die Kondensationsreaktion wird im allgemeinen bis zur Beendigung der Ammoniakabspaltung durchgeführt oder nach Erreichen einer gewünschten Viskosität der Reaktionsmischung abgebrochen.

Eine bevorzugte Ausführungsform der vorliegenden Erfindung betrifft ein Verfahren zur Herstellung von basischen Polykondensaten, dadurch gekennzeichnet, dass man
(a) Diethylentriamin unter Inertbedingungen mit einem Ammoniumsalz aus der Gruppe Ammoniumchlorid, Ammoniumsulfat, Ammoniumcarbonat, Ammoniumformiat oder Ammoniumacetat in Gegenwart eines hydroxylgruppenhaltigen Lösungsmittels reagieren lässt und
(b) das gemäss (a) erhaltene protonierte Produkt mit einem Dicyandiamid bei erhöhter Temperatur umsetzt.

Eine besonders bevorzugte Ausführungsform der vorliegenden Erfindung betrifft ein Verfahren zur Herstellung von basischen Polykondensaten, dadurch gekennzeichnet, dass man
(a) 1 Mol-Äquivalent Diethylentriamin unter Inertbedingungen mit 1 bis 1,5 Mol-Äquivalenten Ammoniumchlorid in Gegenwart von 0,4 bis 5 Mol-Äquivalenten Ethylenglykol, 1,2- oder 1,3-Propylenglykol, Butylenglykol, Di-, Tri- oder Tetraethylenglykol oder eines Ethers davon, eines Polyethylenglykols mit einem Molgewicht von 600 bis 5000 oder eines Gemisches zweier oder mehrerer der genannten Lösungsmittel bei einer Temperatur von 110 bis 140°C umsetzt und
(b) zu dem gemäss (a) erhaltenen die protonierte Verbindung der Formel (1) enthaltenden Reaktionsgemisch 0,5 bis 2 Mol-Äquivalente Dicyandiamid bei einer Temperatur von 140 bis 180°C zudosiert und nach beendeter Zugabe bei einer Temperatur von 160 bis 250°C ausreagieren lässt.

Die Reaktionsprodukte sind bei Raumtemperatur feste Schmelzen mit basischen Eigenschaften, die in Wasser klare Lösungen liefern; sie können durch Neutralisation mit anorganischen oder organischen Säuren wie Salzsäure oder Essigsäure in ihre wasserlöslichen Salze überführt werden.

Das gemäss (b) erhaltene Reaktionsgemisch wird vorzugsweise aufgearbeitet, indem man es mit Wasser verdünnt und so auf eine vorgegebene Produkt-Endkonzentration, die z.B. 20 bis 80 Gew.-% und vorzugsweise 35 bis 75 Gew.-%, bezogen auf das gesamte Gemisch, betragen kann, einstellt.

Das erfindungsgemässe Verfahren liefert die Polykondensationsprodukte einfach, in praktisch quantitativer Ausbeute und mit hoher Verfahrenssicherheit; die Raum-Zeit-Ausbeute ist ausgezeichnet.

Die gemäss dem erfindungsgemässen Verfahren hergestellten Polykondensate oder ihre Salze eignen sich insbesondere als Nachbehandlungsmittel zur Verbesserung der Nassechtheiten von gefärbtem oder bedrucktem Textilmaterial aus hydroxygruppen- oder aminogruppenhaltigen Fasern, insbesondere von Textilmaterial aus natürlicher oder regenerierter Cellulose, die mit Direkt- oder Reaktivfarbstoffen gefärbt ist.

Die nachfolgenden Beispiele erläutern die Erfindung. Darin bedeuten Teile Gewichtsteile, soweit nichts anderes angegeben ist.

Beispiel 1: Man legt 206,4 Teile Diethylentriamin und 55,6 Teile Ethylenglykol bei Raumtemperatur in einem Reaktor unter Inertgas-Atmosphäre vor und erwärmt unter leichtem Stickstoffstrom auf 120°C. Danach werden 128 Teile Ammoniumchlorid innerhalb von einer Stunde portionsweise so zugegeben, dass die Innentemperatur ≥ 118°C bleibt. Nach beendeter Zugabe wird das Reaktionsgemisch auf 160°C erhitzt und 218 Teile Dicyandiamid unter Inertbedingungen innerhalb von einer Stunde so zugesetzt, dass die Innentemperatur oberhalb von 155°C bleibt. Die Mischung wird dann auf 180 bis 210°C erhitzt und ca. 1 bis 5 Stunden bei dieser Temperatur gehalten. Am Schluss gibt man 200 Teile deionisiertes Wasser innerhalb von ca. 20 bis 25 Minuten zu und erhält 665 Teile einer Lösung mit einem Trockengehalt von 70 %.

Beispiel 2: Man legt 206,4 Teile Diethylentriamin und 35,9 Teile Ethylenglykol bei Raumtemperatur in einem Reaktor unter Inertgas-Atmosphäre vor und erwärmt unter leichtem Stickstoffstrom auf 120°C. Danach werden 128 Teile Ammoniumchlorid innerhalb von einer Stunde portionsweise so zugegeben, dass die Innentemperatur ≥ 118°C bleibt. Nach beendeter Zugabe wird das Reaktionsgemisch auf 160°C erhitzt und 218 Teile Dicyandiamid unter Inertbedingungen innerhalb von einer Stunde so zugesetzt, dass die Innentemperatur oberhalb von 155°C bleibt. Die Mischung wird dann auf 180 bis 185°C erhitzt und ca. 3 Stunden bei dieser Temperatur gehalten. Am Schluss gibt man 200 Teile deionisiertes Wasser innerhalb von ca. 20 bis 25 Minuten zu und erhält 665 Teile einer Lösung mit einem Trockengehalt von 70 %.

Beispiel 3: Man legt 206,4 Teile Diethylentriamin und 35,9 Teile Ethylenglykol bei Raumtemperatur in einem Reaktor unter Inertgas-Atmosphäre vor und erwärmt unter leichtem Stickstoffstrom auf 120°C. Danach werden 128 Teile Ammoniumchlorid innerhalb von einer Stunde portionsweise so zugegeben, dass die Innentemperatur ≥ 118°C bleibt. Nach beendeter Zugabe wird das Reaktionsgemisch auf 160°C erhitzt und 218 Teile Dicyandiamid unter Inertbedingungen innerhalb von einer Stunde so zugesetzt, dass die Innentemperatur oberhalb von 155°C bleibt. Die Mischung wird dann auf 207°C erhitzt und ca. 1 Stunde bei dieser Temperatur gehalten. Am Schluss gibt man 200 Teile deionisiertes Wasser innerhalb von ca. 20 bis 25 Minuten zu und erhält 665 Teile einer Lösung mit einem Trockengehalt von 70 %.

Beispiel 4: Man legt 206,4 Teile Diethylentriamin und 102,2 Teile Ethylenglykol bei Raumtemperatur in einem Reaktor unter Inertgas-Atmosphäre vor und erwärmt unter leichtem Stickstoffstrom auf 120°C. Danach werden 128 Teile Ammoniumchlorid innerhalb von einer Stunde portionsweise so zugegeben, dass die Innentemperatur ≥ 118°C bleibt. Nach beendeter Zugabe wird das Reaktionsgemisch auf 160°C erhitzt und 218 Teile Dicyandiamid unter Inertbedingungen innerhalb von einer Stunde so zugesetzt, dass die Innentemperatur oberhalb von 155°C bleibt. Die Mischung wird dann auf 183°C erhitzt und ca. 1 Stunde bei dieser Temperatur gehalten. Am Schluss gibt man 200 Teile deionisiertes Wasser innerhalb von ca. 20 bis 25 Minuten zu und erhält 665 Teile einer Lösung mit einem Trockengehalt von 70 %.

Beispiel 5: Man legt 206,4 Teile Diethylentriamin und 55,3 Teile Propylenglykol bei Raumtemperatur in einem Reaktor unter Inertgas-Atmosphäre vor und erwärmt unter leichtem Stickstoffstrom auf 120°C. Danach werden 128 Teile Ammoniumchlorid innerhalb von einer Stunde portionsweise so zugegeben, dass die Innentemperatur ≥ 118°C bleibt. Nach beendeter Zugabe wird das Reaktionsgemisch auf 160°C erhitzt und 218 Teile Dicyandiamid unter Inertbedingungen innerhalb von einer Stunde so zugesetzt, dass die Innentemperatur oberhalb von 155°C bleibt. Die Mischung wird dann auf 190°C erhitzt und ca. 1 Stunde bei dieser Temperatur gehalten. Am Schluss gibt man 200 Teile deionisiertes Wasser innerhalb von ca. 20 bis 25 Minuten zu und erhält 665 Teile einer Lösung mit einem Trockengehalt von 70 %.

Beispiel 6: Man legt 206,4 Teile Diethylentriamin und 110,5 Teile Propylenglykol bei Raumtemperatur in einem Reaktor unter Inertgas-Atmosphäre vor und erwärmt unter leichtem Stickstoffstrom auf 120°C. Danach werden 128 Teile Ammoniumchlorid innerhalb von einer Stunde portionsweise so zugegeben, dass die Innentemperatur ≥ 118°C bleibt. Nach beendeter Zugabe wird das Reaktionsgemisch auf 160°C erhitzt und 218 Teile Dicyandiamid unter Inertbedingungen innerhalb von einer Stunde so zugesetzt, dass die Innentemperatur oberhalb von 155°C bleibt. Die Mischung wird dann auf 190°C erhitzt und ca. 1 Stunde bei dieser Temperatur gehalten. Am Schluss gibt man 200 Teile deionisiertes Wasser innerhalb von ca. 20 bis 25 Minuten zu und erhält 665 Teile einer Lösung mit einem Trockengehalt von 70 %.

Beispiel 7: Man legt 206,4 Teile Diethylentriamin und 165,75 Teile Propylenglykol bei Raumtemperatur in einem Reaktor unter Inertgas-Atmosphäre vor und erwärmt unter leichtem Stickstoffstrom auf 120°C. Danach werden 128 Teile Ammoniumchlorid innerhalb von einer Stunde portionsweise so zugegeben, dass die Innentemperatur ≥ 118°C bleibt. Nach beendeter Zugabe wird das Reaktionsgemisch auf 160°C erhitzt und 218 Teile Dicyandiamid unter Inertbedingungen innerhalb von einer Stunde so zugesetzt, dass die Innentemperatur oberhalb von 155°C bleibt. Die Mischung wird dann auf 190°C erhitzt und ca. 1 Stunde bei dieser Temperatur gehalten. Am Schluss gibt man 200 Teile deionisiertes Wasser innerhalb von ca. 20 bis 25 Minuten zu und erhält 665 Teile einer Lösung mit einem Trockengehalt von 70 %.

## Patentansprüche

1. Verfahren zur Herstellung von basischen Polykondensaten, dadurch gekennzeichnet, dass man
(a) ein Amin der Formel 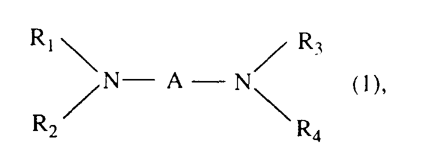 worin R₁, R₂, R₃ und R₄ unabhängig voneinander je Wasserstoff oder gegebenenfalls durch Amino, Hydroxy, Cyano oder C₁-C₄-Alkoxy substituiertes Alkyl bedeuten und A gegebenenfalls substituiertes oder durch ein oder mehrere Heteroatome unterbrochenes Alkylen ist, mit einem Ammoniumsalz in Gegenwart eines nichtwässrigen Lösungsmittels reagieren lässt, wobei das Verhältnis Amin : Ammoniumsalz 1 : 0,7 bis 1 : 2 beträgt, und
(b) das gemäss (a) erhaltene protonierte Produkt mit einem Cyanamid bei erhöhter Temperatur umsetzt.

2. Verfahren gemäss Anspruch 1, dadurch gekennzeichnet, dass A in Formel (1) gegebenenfalls durch -O-, -S-, -NH- oder -N(C₁-C₄-Alkyl)- unterbrochenes und/oder durch OH substituiertes C₂-C₂₀-Alkylen und vorzugsweise einfach oder mehrfach durch -NH- unterbrochenes C₂-C₂₀-Alkylen bedeutet.

3. Verfahren gemäss Anspruch 1 oder 2, dadurch gekennzeichnet, dass die Verbindung der Formel (1) ein Polyethylenpolyamin, vorzugsweise Diethylentriamin, ist.

4. Verfahren gemäss einem der Ansprüche 1 bis 3, dadurch gekennzeichnet, dass es sich bei der Ammoniumverbindung um Ammoniumchlorid, Ammoniumsulfat, Ammoniumcarbonat, Ammoniumformiat oder Ammoniumacetat und bevorzugt um Ammoniumchlorid handelt.

5. Verfahren gemäss einem der Ansprüche 1 bis 4, dadurch gekennzeichnet, dass das nichtwässrige Lösungsmittel ein hydroxylgruppenhaltiges Lösungsmittel ist.

6. Verfahren gemäss einem der Ansprüche 1 bis 5, dadurch gekennzeichnet, dass das nichtwässrige Lösungsmittel Ethylenglykol, 1,2- oder 1,3-Propylenglykol, Butylenglykol, Di-, Tri- oder Tetraethylenglykol oder ein Ether davon, ein Polyethylenglykol mit einem Molgewicht von 600 bis 5000 oder ein Gemisch zweier oder mehrerer der genannten Lösungsmittel ist.

7. Verfahren gemäss einem der Ansprüche 1 bis 6, dadurch gekennzeichnet, dass es sich bei dem Cyanamid im Schritt (b) um Dicyandiamid handelt.

8. Verfahren gemäss einem der Ansprüche 1 bis 7, dadurch gekennzeichnet, dass man die Verbindung der Formel (1) und das Ammoniumsalz im Schritt (a) in einem Molverhältnis von 1:1 bis 1:1,5 eingesetzt.

9. Verfahren gemäss einem der Ansprüche 1 bis 8, dadurch gekennzeichnet, dass man im Schritt (a) die Verbindung der Formel (1) in dem hydroxylgruppenhaltigen Lösungsmittel oder Lösungsmittelgemisch vorlegt, die Ammoniumverbindung hinzudosiert und die Umsetzung unter Inertbedingungen durchführt.

10. Verfahren gemäss einem der Ansprüche 1 bis 9, dadurch gekennzeichnet, dass man den Schritt (b) ausführt, indem man das Cyanamid zum gemäss (a) erhaltenen Reaktionsgemisch bei einer Temperatur von 140 bis 180°C zudosiert und nach beendeter Zugabe bei einer Temperatur von 160 bis 250°C ausreagieren lässt.

11. Verfahren gemäss Anspruch 1 zur Herstellung von basischen Polykondensaten, dadurch gekennzeichnet, dass man
(a) Diethylentriamin unter Inertbedingungen mit einem Ammoniumsalz aus der Gruppe Ammoniumchlorid, Ammoniumsulfat, Ammoniumcarbonat, Ammoniumformiat oder Ammoniumacetat in Gegenwart eines hydroxylgruppenhaltigen Lösungsmittels reagieren lässt und
(b) das gemäss (a) erhaltene protonierte Produkt mit einem Dicyandiamid bei erhöhter Temperatur umsetzt.

12. Verfahren gemäss Anspruch 1 zur Herstellung von basischen Polykondensaten, dadurch gekennzeichnet, dass man
(a) 1 Mol-Äquivalent Diethylentriamin unter Inertbedingungen mit 1 bis 1,5 Mol-Äquivalenten Ammoniumchlorid in Gegenwart von 0,4 bis 5 Mol-Äquivalenten Ethylenglykol, 1,2- oder 1,3-Propylenglykol, Butylenglykol, Di-, Tri- oder Tetraethylenglykol oder eines Ethers davon, eines Polyethylenglykols mit einem Molgewicht von 600 bis 5000 oder eines Gemisches zweier oder mehrerer der genannten Lösungsmittel bei einer Temperatur von 110 bis 140°C umsetzt und
(b) zu dem gemäss (a) erhaltenen die protonierte Verbindung der Formel (1) enthaltenden Reaktionsgemisch 0,5 bis 2 Mol-Äquivalente Dicyandiamid bei einer Temperatur von 140 bis 180°C zudosiert und nach beendeter Zugabe bei einer Temperatur von 160 bis 250°C ausreagieren lässt.

## Claims

1. A process for the preparation of a basic polycondensate, which process comprises
(a) reacting an amine of formula 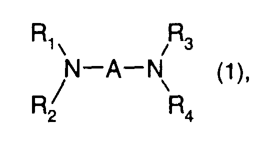 wherein R₁, R₂, R₃ and R₄ are each independently of one another hydrogen or alkyl which is unsubstituted or substituted by amino, hydroxy, cyano or C₁-C₄alkoxy, and A is alkylene which is unsubstituted or substituted or interrupted by one or more than one hetero atom, with an ammonium salt in the presence of an anhydrous solvent, the ratio of amine : ammonium salt being from 1 : 0.7 to 1: 2, and
(b) reacting the protonised product obtained according to (a) with a cyanamide at elevated temperature.

2. A process according to claim 1, wherein A in formula (1) is C₂-C₂₀alkylene which may be interrupted by -O-, -S-, -NH- or -N(C₁-C₄alkyl)- and/or substituted by OH and which is preferably interrupted by one or more than one -NH- group.

3. A process according to either claim 1 or claim 2, wherein the compound of formula (1) is a polyethylenepolyamine, preferably diethylenetriamine.

4. A process according to any one of claims 1 to 3, wherein the ammonium compound is ammonium chloride, ammonium sulfate, ammonium carbonate, ammonium formate or ammonium acetate and, preferably, ammonium chloride.

5. A process according to any one of claims 1 to 4, wherein the anhydrous solvent is a hydroxyl group-containing solvent.

6. A process according to any one of claims 1 to 5, wherein the anhydrous solvent is ethylene glycol, 1,2- or 1,3-propylene glycol, butylene glycol, di-, tri- or tetraethylene glycol or an ether thereof, a polyethylene glycol having a molecular weight from 600 to 5000, or a mixture of two or more than two of the cited solvents.

7. A process according to any one of claims 1 to 6, wherein the cyanamide in step (b) is dicyandiamide.

8. A process according to any one of claims 1 to 7, which comprises using the compound of formula (1) and the ammonium salt in step (a) in a molar ratio from 1:1 to 1:1.5.

9. A process according to any one of claims 1 to 8, which comprises charging in step (a) the compound of formula (1) to the hydroxyl group-containing solvent or solvent mixture, adding the ammonium compound, and carrying out the reaction under inert conditions.

10. A process according to any one of claims 1 to 9, wherein step (b) is carried out by adding the cyanamide to the reaction mixture obtained according to (a) in the temperature range from 140 to 180°C and, when the addition is complete, allowing the reaction to go to completion in the temperature range from 160 to 250°C.

11. A process according to claim 1 for the preparation of a basic polycondensate, which process comprises
(a) reacting diethylenetriamine, under inert conditions, with an ammonium salt selected from the group consisting of ammonium chloride, ammonium sulfate, ammonium carbonate, ammonium formate and ammonium acetate, in the presence of a hydroxyl group-containing solvent, and
(b) reacting the protonised product obtained according to (a) with a dicyandiamide at elevated temperature.

12. A process according to claim 1 for the preparation of a basic polycondesate, which comprises
(a) reacting 1 molar equivalent of diethylenetriamine, under inert conditions, with 1 to 1.5 molar equivalents of ammonium chloride, in the presence of 0.4 to 5 molar equivalents of ethylene glycol, 1,2- or 1,3-propylene glycol, butylene glycol, di-, tri- or tetraethylene glycol or an ether thereof, of a polyethylene glycol having a molecular weight from 600 to 5000, or of a mixture of two or more than two of the cited solvents, in the temperature range from 110 to 140°C, and
(b) adding to the reaction mixture containing the protonised compound of formula (1) obtained according to (a) 0.5 to 2 molar equivalents of dicyandiamide in the temperature range from 140 to 180°C and, when the addition is complete, allowing the reaction to go to completion in the temperature range from 160 to 250°C.

## Revendications

1. Procédé pour la préparation de polycondensats basiques, caractérisé en ce que,
(a) on fait réagir une amine de formule 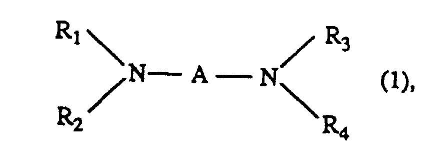 dans laquelle R₁, R₂, R₃ et R₄ représentent indépendamment les uns des autres respectivement un atome d'hydrogène ou un groupe alkyle éventuellement substitué par un groupe amino, hydroxy, cyano ou alcoxy en C₁ à C₄ et A est un groupe alkylène éventuellement substitué ou interrompu par un ou plusieurs hétéroatomes, avec un sel d'ammonium en présence d'un solvant non aqueux et
(b) on met à réagir le produit protoné obtenu selon (a) avec un cyanamide à température élevée.

2. Procédé selon la revendication 1, caractérisé en ce que, A dans la formule (1) représente un groupe alkylène en C₂ à C₂₀ éventuellement interrompu par -O-, -S-, -NH- ou -N(alkyle en C₁ à C₄)- et/ou substitué par OH. A représente de préférence un groupe alkylène en C₂ à C₂₀ interrompu une ou plusieurs fois par -NH-.

3. Procédé selon la revendication 1 ou 2, caractérisé en ce que le composé de formule (1) est une polyéthylène-polyamine, de préférence la diéthylènetriamine.

4. Procédé selon l'une des revendications 1 à 3, caractérisé en ce qu'il s'agit pour le composé d'ammonium de chlorure d'ammonium, de sulfate d'ammonium, de carbonate d'ammonium, de formiate d'ammonium ou d'acétate d'ammonium et de préférence de chlorure d'ammonium.

5. Procédé selon l'une des revendications 1 à 4, caractérisé en ce le solvant non aqueux est un solvant contenant des groupes hydroxyle.

6. Procédé selon l'une des revendications 1 à 5, caractérisé en ce le solvant non aqueux est l'éthylène-glycol, le 1,2- ou 1,3-propylène-glycol, le butylène-glycol, le di-, tri- ou tétraéthylèneglycol ou un éther de ceux-ci, un polyéthylèneglycol ayant une masse molaire de 600 à 5000 ou un mélanges de deux ou d'un plus grand nombre des solvants cités.

7. Procédé selon l'une des revendications 1 à 6, caractérisé en ce qu'il s'agit comme cyanamide à l'étape (b) du dicyandiamide.

8. Procédé selon l'une des revendications 1 à 7, caractérisé en ce que, l'on utilise le composé de formule (1) et le sel d'ammonium à l'étape (a) dans un rapport molaire allant de 1:1 à 1:1,5.

9. Procédé selon l'une des revendications 1 à 8, caractérisé en ce qu'on prépare à l'étape (a) le composé de formule (1) dans le solvant ou le mélange de solvants contenant des groupes hydroxyle, on y ajoute de manière dosée le composé d'ammonium et on réalise la réaction dans des conditions inertes.

10. Procédé selon l'une des revendications 1 à 9, caractérisé en ce qu'on réalise l'étape (b) en ajoutant le cyanamide de manière dosée au mélange réactionnel obtenu conformément à l'étape (a) à une température allant de 140 à 180°C et en ce qu'on le fait réagir à une température allant de 160 à 250°C.

11. Procédé selon la revendication 1 pour la préparation de polycondensats basiques, caractérisé en ce que,
(a) l'on fait réagir une diéthylènetriamine dans des conditions inertes avec un sel d'ammonium choisi parmi le chlorure d'ammonium, le sulfate d'ammonium, le carbonate d'ammonium, le formiate d'ammonium ou l'acétate d'ammonium en présence d'un solvant contenant des groupes hydroxyle et
(b) l'on met à réagir le produit protoné obtenu selon (a) avec un dicyandiamide à température élevée.

12. Procédé selon la revendication 1 pour la préparation de polycondensats basiques, caractérisé en ce que,
(a) l'on met à réagir 1 équivalent molaire de diéthylènetriamine dans des conditions inertes avec 1 à 1,5 équivalents molaires de chlorure d'ammonium en présence de 0,4 à 5 équivalents molaires d'éthylèneglycol, de 1,2-ou 1,3-propylèneglycol, de butylèneglycol, de di-, tri- ou tétraéthylèneglycol ou d'un éther de ceux-ci, d'un polyéthylèneglycol ayant une masse molaire de 600 à 5000 ou d'un mélange de deux ou d'un plus grand nombre des solvants cités à une température allant de 110 à 140°C et
(b) l'on ajoute de manière dosée au mélange réactionnel contenant le composé protoné de formule (1) obtenu selon (a) de 0,5 à 2 équivalents molaires de dicyandiamide à une température allant de 140 à 180°C et on le fait réagir après la fin de l'addition à une température de 160 à 250°C.
